# EUROPEAN PATENT SPECIFICATION

(11) **EP 0 743 340 B1**
(45) Date of publication and mention of the grant of the patent: **04.07.2001**
(21) Application number: 96106267.6
(22) Date of filing: 22.04.1996
(51) Int. Cl.: C08L 23/04, C08L 23/16, C08L 25/10, B65D 41/00, B65D 1/00, B65D 53/06

(54) **Thermoplastic composition suitable for molding on a closure to form a gasket.**
Thermoplastenmasse zur Bildung einer Dichtung auf einem Verschluss
Composition thermoplastique utile pour moulage dans une fermeture pour fermer un joint d'étanchéité

(30) Priority: 15.05.1995 IT MI950980
(43) Date of publication of application: 20.11.1996
(73) Proprietor: Foreco S.r.l., 20010 Marcallo Con Casone (Milano) (IT)
(72) Inventor: Girardi, Franco, 20099 - Sesto San Giovanni, Milano (IT); Bartolommei, Laura, 57013 - Rosignano Solvay, Livorno (IT)
(74) Representative: Forattini, Amelia

(56) References cited:
- EP-A1- 0 205 914
- EP-A2- 0 339 831
- US-A- 5 409 992

## Description

The present invention relates to a thermoplastic composition that is suitable for molding on a closure cap to form a gasket therein. In particular, gaskets of this type are known in which, for example, the tightness of a screw closure cap made of polypropylene or polyethylene on bottles or containers made of plastic is ensured by introducing, between the closure cap and the container, a gasket made of a thermoplastic polymeric composition.

The process that is most commonly used to mold these gaskets on the closure cap consists in bringing the thermoplastic polymeric composition to its melting point, in depositing the necessary amount of melted material on the inner surface of the closure cap, and in then applying a compressive action with the aid of a punch, which is cooled to facilitate the release of the closure cap part. In this manner, the punch hardens the melted part and gives it the required profile.

To make sure that the gasket does not detach from the closure cap and that tightness remains constant in time, despite subjecting the closure cap to repeated opening and closing actions, some refinements are required which enhance adhesion without changing the internal profile of the closure cap.

In particular for metal closure caps, the adhesion of the thermoplastic material can be enhanced by coating with lacquer or other adhesive the tinplate or chromium plate on which the gasket is deposited. This refinement cannot be used in the case of plastic closure caps, since these are produced individually by injection and do not allow the application of varnishes or other adhesives. In the case of polypropylene closure caps, in particular, adhesion can be improved both by preheating the closure cap prior to the application of the melted material and by depositing the melted material itself at a temperature above 200°C. When using polypropylene closure caps, both solutions have drawbacks, since the closure cap can become distorted or even partially melt.

The above is the main field of industrial utilization of the invention, but this field is not a limitation of the invention, since the present invention can be applied in equivalent fields in which a gasket must be used inside a closure cap.

It is therefore necessary to provide a thermoplastic material that ensures good adhesion while avoiding closure cap deformation drawbacks.

If one does not restrict oneself to application to closure caps, there are materials that adhere, for example, to laminas of polypropylene and polyethylene. However, these materials can interact harmfully with the food contained in the container, as described for example by patent EP 0117516, in which the use of ethylene or of an acrylic ester is described.

Patents EP 205914 and EP 32804 describe compositions based on mixtures of ethylene-vinyl acetate and polyethylene and an ethylene-polypropylene copolymer with a high content of ethylene plus various additives. However, these compositions cannot allow to deposit the product at temperatures below 200°C and therefore cannot be used for the above described purposes. Patent EP 339831 deals with the problem of low-temperature adhesion and describes a composition that can be molded on the closure cap and is formed by ethylene vinyl acetate, a polypropylene ethylene copolymer with a low ethylene content, which promotes compatibility between the gasket and the closure cap. However, in practice it has been observed that first of all, the high content of ethylene vinyl acetate taught by this document entails problems due to the possible hydrolysis of the ester once the gasket makes contact with the food, thus entailing possible contamination of the food. Secondly, a degradation of the mechanical characteristics after a long contact with the beverages has been observed. Finally, and even more importantly, it has been observed that the adhesion between the closure cap and the gasket is so weak that it cannot even be detected with a dynamometer normally used for these tests.

An object of the present invention is therefore to solve the above mentioned problems with a thermoplastic composition that allows to mold a gasket on the closure cap with good adhesion.

Another object of the invention is to avoid the use, in the composition of the thermoplastic polymer, of components that can degrade, such as for example butadiene rubbers, and/or can release parts into the contained food product, such as for example EVA.

Another object is to avoid the use of liquid components that can migrate.

Another object is to preserve the mechanical characteristics of the gasket even after a long contact with the food products.

Another object is to obtain a simple formula, with a limited number of components, thus simplifying production problems.

Another object is to simplify the molding process with a composition that can be easily treated at low temperatures, avoiding the introduction of cutting or molding problems.

This aim, these objects, and others are achieved by the composition according to the invention, which is suitable for molding on a closure cap to form a gasket in the closure cap and includes:
a) at least one thermoplastic polymer, chosen among:
   polyethylene, polyethylene-polypropylene elastomer copolymer, ethylene vinyl acetate, polyethylene-polypropylene alloys, styrene-butadiene-styrene copolymers, ethylene-propylene-diene terpolymers, and a coterpolymer of ethylene; and
b) a two-phase blend in which one phase is based on polypropylene and the other phase is based on an ethylene propylene copolymer, these two phases being arranged to form a fibrillar structure.

Preferably said two-phase blend has a melting temperature of 120 to 160°C and a melt flow index (190°C/2.16 kg) that can vary between 0.5 and 8 gr/10'.

Preferably, the two-phase blend has a modulus between 60 and 350 Mpa and more preferably between 70 and 90 Mpa, according to ASTM D 790. In this manner, adhesion ability is increased.

Preferably, the percentage of two-phase blend on the total by weight is between 3 and 30%, more preferably between 5 and 10%.

Preferably, the ethylene-propylene copolymer contained in the two-phase blend is contained in an amount between 20% and 80%, more preferably between 30% and 70%, even more preferably between 40% and 60%.

Preferably, the ethylene coterpolymer of item a) is chosen among: very-low-density to low-density linear polyethylene-polypropylene, low-density linear polyethylene copolymer, and very-low-density polyethylene, a copolymer of low-density linear polyethylene and low-density polyethylene, a copolymer of ultra-low-density polyethylene and very low-density polyethylene.

Preferably, the ethylene coterpolymer has a density between 0.880 and 0.910.

Preferably, the ethylene coterpolymer has a melt flow index (190°C/2.16 kg) between 0.8 and 15 gr/10', preferably between 7 and 13.

Preferably, the ethylene coterpolymer is a copolymer of ultra-low-density polyethylene and very-low-density polyethylene, which can be obtained by preparing a mix of ethylene-butene-propylene in the gaseous phase (therefore without using solvents) that is compressed at high pressure and injected into a vessel, where it encounters a temperature of approximately 230-240°C that generates itself spontaneously when the Ziegler Natta catalyst is introduced. In this manner, the molecular chains form in less than one minute, then the pressure is lowered, the temperature drops, and the material is granulated.

According to another aspect, the present invention relates to a method for preparing a thermoplastic composition that is suitable for molding on a closure cap, to form a gasket in the closure cap, wherein the method includes the mixing of:
a) at least one thermoplastic polymer chosen among: polyethylene, polyethylene-polypropylene elastomer copolymer, ethylene vinyl acetate, polyethylene-polypropylene alloys, styrene-butadiene-styrene copolymers, ethylene-propylene-diene terpolymers, and a coterpolymer of ethylene; and
b) a two-phase blend with a polypropylene matrix, which contains an ethylene propylene copolymer that has a melting temperature of 120 to 160°C and a melt flow index that can vary between 0.5 and 8 gr/10'.

Preferably, the two-phase blend can be obtained with a multistage polymerization method as described in the article "In situ polyolefin alloys" (Giuliano Cecchin Macromol. Symp. 78, 213-228 (1994) Huthing & Well Verlag, Basel), with Ziegler Natta catalysts having high-yield and high stereospecificity that are based on magnesium chloride supported on titanium chloride.

Preferably, the two-phase blend can be obtained by introducing the ethylene-propylene copolymer, contained in the two-phase blend, during the polymerization that forms the polypropylene matrix. The resulting structure is constituted by a co-continuous fabric that consists of fibrils that are aligned along the injection direction and of a few small spheroidal inclusions; the fibrils are constituted by a series of laminas that are predominantly orientated at right angles to the axis of the fibril.

In other words, a two-phase blend is said to form a co-continuous fabric, or to display a co-continuous morphology, when both phases are substantially continuous and form an interpenetrating network.

This situation arises probably from the impossibility, for the crystalline phase, to develop into spherulites, due both to the lack of available space, and to a possible nucleation of the system at the interface of rubber rich in propene-polypropylene. This structure, determined by the analysis (TEM) of a supersoft copolymer, is similar to that of high-elasticity polypropylene fibers, and this explains some particular mechanical properties of the material, such as high elongation ability, considerable hardness after deformation, and satisfactory elastic return.

Empirically, it is noted that in order to have 100% elongation of the material it is necessary to apply a tension that is equal to only 30% of the scale of the instrument; this entails that the two-phase blend can be viewed as an intermediate between a cross-linked polyolefin thermoplastic elastomer and a conventionally-soft polyolefin product. These characteristics can contribute to the considerable increase in adhesion provided to the gasket.

Preferably, component a) is formed by a product marketed under the trade-name Clearflex by Enichem, and component b) is marketed under the trade-name Adflex by Montell.

To facilitate separation, workability of the material and its optional pigmentation, the composition can include commercial additives in conventional amounts by no more than 5% by weight with respect to the total weight of the composition.

Preferably, adjuvants for separation and melting, as well as flow adjuvants, are absent, in view of the good processability of the composition formulated according to the invention. In this manner it is possible to avoid reducing the adhesion of the gasket to the polypropylene closure cap.

Although the compositions are particularly important when the closure cap is made of polypropylene, they can also be used for closure caps made of polyethylene, aluminum, or other metallic materials. The closure caps are generally of the screw type, but can also be of the press-on type.

The composition can be produced by mechanical mixing of the components and subsequent extrusion, can be granulated and stored for subsequent use, or directly injected, in the melted state, in the closure caps. Known cutting and molding devices are used to deposit a known amount of melted material in polypropylene closure caps for subsequent molding.

If the closure cap is, as preferable, made of polypropylene, and is of the screw type, it is normally not preheated at the time of the deposition of the melted material. The melted material is poured into the closure cap at a temperature that can vary between 200° and 150°C and is molded at temperatures typically between 150°C and 180°C. The dimensions of the closure cap can vary between 20 and 100 mm in outside diameter, whereas the dimensions of the gasket match the inside diameter of the closure cap. The closure cap can be provided with a theft-preventing device or with a tamper-evident ring.

The invention will become apparent with reference to the following examples, which are provided by way of illustration.

The compositions listed in the accompanying Table 1 were prepared by mechanical mixing with a granule mixer operating at room temperature for 15 minutes.

The composition was extruded and granulated, or calendered, and then melted at a temperature of 160°C, poured onto sheets of the polypropylene used to produce screw closure caps and, with the aid of a press, was compressed for approximately 8 seconds with a pressure of 5-6 bar.

Adhesion was evaluated when cold on punched-out circular specimens having a diameter of 20 mm, using a commercial dynamometer (Acquati) appropriately equipped with a system of suckers, which by virtue of vacuum allow to grip the sample and to measure adhesion in a range between 0.5 and 2 kg/cm².

The melt flow index was measured by using a melt flow index unit (ATS Faar) according to ASTM D 1238 standards (190°C/2.16 kg). The corresponding melting temperatures were determined by DSC (Differential Scanning Calorimetry) (Perkin Elmer).

Density was measured by evaluating the Archimedean thrust in distilled water (Sartorius system according to ASTM D 792 standard).

All compositions were produced by calendering, except for the compositions of tests 5, 6, 7, and 9, which were extruded with a volume at the industrial level, the granulated material being then melted and applied to the closure caps at a temperature of 160°C by cold punching. The adhesion values, measured in the above described manner, but directly on the closure caps, remained unchanged.

Since test 6 of Table 1 is the one that offers the most interesting results, the mixtures analyzed to achieve the composition of this test are listed in Table 2.

**TABLE 1**

| **TESTS** | **COMPOSITION (%)** | **MFI gr/10'** | **MELTING TEMPERATURE (°C)** | **ADHESION (kg/cm**^{**2**}**)** |
|---|---|---|---|---|
| TEST 1 | EVA (90% | 6.45 | 97 | 1 |
| | Catalloy (8.5%) | | | |
| | Pigment (1%) | | | |
| | Slip enhancer (0.5%) | | | |
| TEST 2 | UL/VLDPE 1 (70.5%) | 6.06 | 107.3 | 1 |
| | Catalloy (8.5%) | | | |
| | Pigment (1%) | | | |
| | PE (20%) | | | |
| TEST 3 | UL/VLDPE 1 (75%) | 5.76 | 106 | 0.9 |
| | Catalloy (8.5%) | | | |
| | Pigment (1%) | | | |
| | PE (15%) | | | |
| | Slip enhancer (0.5%) | | | |
| TEST 4 | UL/VLDPE 1 (80.5%) | 5.9 | 107 | 2 |
| | Catalloy (8.5%) | | | |
| | Pigment (1%) | | | |
| | PE (10%) | | | |
| TEST 5 | UL/VLDPE 1 (90%) | 5.76 | 110 | 1.5 |
| | Catalloy (8.5%) | | | |
| | Pigment (1%) | | | |
| | Slip enhancer (0.5%) | | | |
| TEST 6 | UL/VLDPE 1 (90.5) | 5.76 | 110.9 | 2 |
| | Catalloy (8.5%) | | | |
| | Pigment (1%) | | | |
| TEST 7 | UL/VLDPE 2 (90.5%) | 9.1 | 107.29 | 1.4 |
| | Catalloy (8.5%) | | | |
| | Pigment (1%) | | | |
| TEST 8 | UL/VLDPE 2 (90%) | 9.1 | 110.9 | 0.9 |
| | Catalloy (8.5%) | | | |
| | Pigment (1%) | | | |
| | Slip enhancer (0.5%) | | | |
| TEST 9 | UL/VLDPE 2 (89%) | 9.0 | 109.9 | 1.2 |
| | Catalloy (10%) | | | |
| | Pigment (1%) | | | |
| TEST 10 | Clearflex MPDO (100%) | 7.5 | 123 | unrecordable |

**TABLE 2**

| **TESTS** | **COMPOSITION (%)** | **MFI gr/10'** | **ADHESION (kg/cm**^{**2**}**)** |
|---|---|---|---|
| TEST 6A | UL/VLDPE 1 (96.5) | 6.6 | 0.3 |
| | Catalloy (2.5%) | | |
| | Pigment (1%) | | |
| TEST 6B | UL/VLDPE 1 (94.5) | 6.4 | 0.4 |
| | Catalloy (4.5%) | | |
| | Pigment (1%) | | |
| TEST 6C | UL/VLDPE 1 (92.5) | 6.00 | 0.7 |
| | Catalloy (6.5%) | | |
| | Pigment (1%) | | |
| TEST 6 | UL/VLDPE 1 (90.5) | 5.76 | 2 |
| | Catalloy (8.5%) | | |
| | Pigment (1%) | | |
| TEST 6D | UL/VLDPE 1 (88.5) | 5.4 | 1.1 |
| | Catalloy (10.5%) | | |
| | Pigment (1%) | | |

EVA is Escorene UL 00714; it is an ethylene vinyl acetate copolymer with a melt flow index of 7 gr/10' and with 14% vinyl acetate.

Catalloy is Adflex Q 100 F, produced by Montell. It is a two-phase blend of polypropylene with a random matrix, containing 60 to 65% of copolymer with different polyethylene-polypropylene block sizes, with a C₃ unit content of 70% by weight with respect to the total weight of the copolymer. This copolymer has a melt flow index (230°C/2.16 kg) of 0.6 gr/10'.

PE is Lacqtene 1200 MN 18 and is a low-density polyethylene with a melt flow index of 22 gr/10', marketed by Elf Atochem.

UL/VLDPE 1 is Clearflex MPDO and is a copolymer that contains very-low-density polyethylene and ultra-low-density polyethylene with a melt flow index of 7.5 gr/10' and a density of 0.9 gr/cm³, marketed by Enichem.

UL/VLDPE 2 is Clearflex MQBO and is a copolymer that contains very-low-density polyethylene and ultra-low-density polyethylene with a melt flow index of 13 gr/10' and a density of 0.911 gr/cm³, marketed by Enichem.

The slip enhancer is Crodamide ER, with melting point between 78 and 81°C, iodine value between 75 and 82, minimum amide purity 98%, marketed by Croda Universal Ltd.

The pigment is a pigment marketed by Ital master.

In Test 1, adhesion is good, but the composition contains ethylene vinyl acetate, characterized by an unpleasant odor combined with the possibility of interacting with food.

Tests 2-3-4 show that adhesion increases by increasing the amount of UL/VLDPE 1. Test 10, for comparison and beyond the scope of the patent, shows however that it is still necessary to introduce a percentage of Adflex to ensure adhesion.

It is also noted that the slip enhancer reduces adhesion (Tests 3, 4-5, and 7-8). Comparison of Tests 6 and 7 shows that adhesion decreases but remains high; this suggests that it is preferable to use a polyethylene material with a density of no more than 0.900 gr/cm³.

## Claims

1. Thermoplastic composition suitable for molding on a closure cap to form a gasket in said closure cap, wherein said composition comprises:
a) at least one thermoplastic polymer, chosen among:
polyethylene, polyethylene-polypropylene elastomer copolymer, ethylene vinyl acetate, polyethylene-polypropylene alloys, styrene-butadiene-styrene copolymers, ethylene-propylene-diene terpolymers, and a coterpolymer of ethylene; and
b) a two-phase blend in which one phase is based on polypropylene and the other phase is based on an ethylene propylene copolymer, these two phases being arranged to form a fibrillar structure.

2. Composition according to claim 1, wherein a percentage of said two-phase blend on the total by weight is between 3% and 30%, preferably between 5% and 10%.

3. Copolymer according to at least one of the preceding claims, wherein said two-phase blend can be obtained with a multistage polymerization process, with Ziegler Natta catalysts having high yield and stereospecificity supported on magnesium chloride.

4. Composition according to claim 3, wherein said two-phase blend can be obtained by introducing said ethylene-propylene copolymer, contained in said two-phase blend, during the polymerization stage that forms said polypropylene phase.

5. Composition according to at least one of the preceding claims, wherein said ethylene propylene copolymer contained in said two-phase blend is contained in an amount between 20% and 80%, preferably between 30% and 70%, more preferably between 40% and 60%.

6. Composition according to at least one of the preceding claims, wherein said coterpolymer of ethylene is chosen among: very-low-density to low-density linear polyethylene-polypropylene, low-density linear polyethylene/very-low-density polyethylene, low-density linear polyethylene/low-density polyethylene, ultra-low-density polyethylene/very low-density polyethylene.

7. Composition according to claim 6, wherein said ethylene coterpolymer has a density between 0.880 and 0.910.

8. Composition according to at least one of claims 6 or 7, wherein said ethylene coterpolymer has a melt flow index (190°C/2.16 kg) of 0.8 to 15 gr/10'.

9. Composition according to at least one of claims 6 to 8, wherein said ethylene coterpolymer is ultra-low-density polyethylene/very-low-density polyethylene.

10. Composition according to at least one of the preceding claims, wherein said two-phase blend has a modulus of 60 to 350 Mpa and preferably 70 to 90 Mpa.

11. Composition according to at least one of the preceding claims in which said two-phase blend has a melting temperature of 120 to 160°C and a melt flow index (190°C/2.16 kg) that can vary between 0.5 and 8 gr/10'.

12. Composition according to at least one of the preceding claims in which said fibrillar structure is made of fibrils, aligned along the injection direction.

13. Composition according to claim 12, in which said fibrils are constituted by a series of laminas, said laminas being preferably oriented predominantly at right angles to an axis of said fibril.

14. Polypropylene closure cap having a gasket formed with a composition according to at least one of the preceding claims.

15. Container for food products, comprising a closure cap and a gasket that is formed with a composition according to at least one of the preceding claims.

16. Method for preparing a thermoplastic composition suitable for molding on a closure cap to form a gasket in said closure cap, wherein said method comprises the mixing of:
a) at least one thermoplastic polymer, chosen among: polyethylene, polyethylene-polypropylene elastomer copolymer, ethylene vinyl acetate, polyethylene-polypropylene alloys, styrene-butadiene-styrene copolymers, ethylene-propylene-diene terpolymers, and a coterpolymer of ethylene; and
b) a two-phase blend with a polypropylene matrix, which contains an ethylene propylene copolymer that has a melting temperature of 120 to 160°C and a melt flow index that can vary between 0.5 and 8 gr/10'.

## Patentansprüche

1. Thermoplastmasse zum Aufbringen auf eine Verschlußkappe, um bei der Verschlußkappe eine Dichtung auszubilden, wobei die Masse folgende Bestandteile enthält:
a) mindestens ein aus der folgenden Gruppe gewähltes thermoplastisches Polymer: Polyethylen, Polyethylen-Polypropylen-Elastomer-Kopolymer, Ethylen-Vinyl-Acetat, Polyethylen-Polypropylen-Verbindungen, Styren-Butadien-Styren-Kopolymere, Ethylen-Propylen-Dien-Terpolymere sowie ein Koterpolymer von Ethylen; und
b) eine zweiphasige Mischung, bei der eine Phase auf Polypropylen basiert und die andere Phase auf einem Ethylen-Polypropylen-Kopolymer basiert, wobei diese beiden Phasen so angeordnet sind, daß sie eine feinfaserige Struktur bilden.

2. Masse nach Anspruch 1, dadurch gekennzeichnet, daß der Anteil der zweiphasigen Mischung an der Gesamtmasse zwischen 3 Gew.-% und 30 Gew.-%, vorzugsweise zwischen 5 Gew.-% und 10 Gew.-%, beträgt.

3. Kopolymer nach mindestens einem der voranstehenden Ansprüche, dadurch gekennzeichnet, daß die zweiphasige Mischung mittels eines mehrstufigen Polymerisationsverfahrens mit von Magnesiumchlorid getragenen Ziegler Natta Katalysatoren, die eine hohe Ausbeute und Stereospezifizität aufweisen, erhalten werden kann.

4. Masse nach Anspruch 3, dadurch gekennzeichnet, daß die zweiphasige Mischung durch Einbringen des in der zweiphasigen Mischung enthaltenen Ethylen-Propylen-Kopolymers während der Polymerisationsstufe, die die Polypropylenphase bildet, erhalten werden kann.

5. Masse nach mindestens einem der voranstehenden Ansprüche, dadurch gekennzeichnet, daß das in der zweiphasigen Mischung enthaltene Ethylen-Propylen-Kopolymer in einem Anteil von zwischen 20% und 80%, vorzugsweise zwischen 30% und 70% und noch weiter bevorzugt zwischen 40% und 60% enthalten ist.

6. Masse nach mindestens einem der voranstehenden Ansprüche, dadurch gekennzeichnet, daß das Koterpolymer von Ethylen aus der folgenden Gruppe gewählt ist: very-low-density bis low-density linear Polyethylen-Polypropylen, low-density linear Polyethylen / very-low-density Polyethylen, low-density linear Polyethylen / low-density Polyethylen, ultra-low-density Polyethylen / very-low-density Polyethylen.

7. Masse nach Anspruch 6, dadurch gekennzeichnet, daß das Ethylen-Koterpolymer eine Dichte zwischen 0,880 und 0,910 aufweist.

8. Masse nach mindestens einem der Ansprüche 6 oder 7, dadurch gekennzeichnet, daß das Ethylen-Koterpolymer einen Schmelzindex (190°C/2,16kg) von 0,8 bis 15 gr/10' hat.

9. Masse nach mindestens einem der Ansprüche 6 bis 8, dadurch gekennzeichnet, daß das Ethylen-Koterpolymer ein ultra-low-density Polyethylen / very-low-density Polyethylen ist.

10. Masse nach mindestens einem der voranstehenden Ansprüche, dadurch gekennzeichnet, daß die zweiphasige Mischung ein Modul von 60 bis 350 Mpa und vorzugsweise 70 bis 90 Mpa aufweist.

11. Masse nach mindestens einem der voranstehenden Ansprüche, dadurch gekennzeichnet, daß die zweiphasige Mischung eine Schmelztemperatur von 120 bis 160°C und einen Schmelzindex (190°C/2,16 kg) aufweist, der zwischen 0,5 und 8 gr/10' variieren kann.

12. Masse nach mindestens einem der voranstehenden Ansprüche, dadurch gekennzeichnet, daß die feinfaserige Struktur aus in Richtung der Einspritzrichtung ausgerichteten Fibrillen gebildet ist.

13. Masse nach Anspruch 12, dadurch gekennzeichnet, daß die Fibrillen durch eine Reihe von Plättchen gebildet sind, wobei die Plättchen vorzugsweise vorrangig unter rechten Winkeln zu einer Achse der Fibrille ausgerichtet sind.

14. Polypropylen-Verschlußkappe mit einer aus einer Masse nach mindestens einem der voranstehenden Ansprüche gebildeten Dichtung.

15. Behälter für Lebensmittelprodukte mit einer Verschlußkappe und einer Dichtung, die mit einer Masse nach mindestens einem der voranstehenden Ansprüche gebildet ist.

16. Verfahren zum Herstellen einer Thermoplastmasse zum Anformen an eine Verschlußkappe, um eine Dichtung in der Verschlußkappe zu bilden, wobei das Verfahren beinhaltet das Mischen von:
a) mindestens einem aus der folgenden Gruppe gewählten thermoplastischen Polymer: Polyethylen, Polyethylen-Polypropylen-Elastomer-Kopolymer, Ethylen-Vinyl-Acetat, Polyethylen-Polypropylen-Verbindungen, Styren-Butadien-Styren-Kopolymere, Ethylen-Propylen-Dien-Terpolymere sowie ein Koterpolymer von Ethylen; und
b) einer zweiphasigen Mischung mit einer Polypropylenmatrix, welche ein Ethylen-Propylen-Kopolymer enthält, welches eine Schmelztemperatur von 120 bis 160°C sowie einen Schmelzindex aufweist, der zwischen 0,5 und 8 gr/10' variieren kann.

## Revendications

1. Composition thermoplastique à mouler sur un bouchon d'obturation pour former un joint d'étanchéité dans ledit bouchon d'obturation, ladite composition comprenant:
a) au moins un polymère thermoplastique, choisi parmi: le polyéthylène, un copolymère élastomère polyélhylènc-polypropylène, l'éthylène-acétate de vinyle, les alliages polyéthylène-polypropylène, les copolymères styrène-butadiène-styrène, les terpolymères éthylène-propylène-diène et un coterpolymère de l'éthylène; et
b) un mélange à deux phases dans lequel une phase est à base de polypropylène et l'autre phase est à base d'un copolymère éthylène-propylène, ces deux phases étant disposées de manière à former une structure fibrillaire.

2. Composition selon la revendication 1, dans laquelle le pourcentage dudit mélange à deux phases rapporté au poids total est compris entre 3% et 30%, de préférence entre 5% et 10%.

3. Copolymère selon l'une au moins des revendications précédentes, dans lequel ledit mélange à deux phases peut être obtenu avec un procédé de polymérisation à plusieurs étapes, avec des catalyseurs de Ziegler Natta ayant un grand rendement et une grande stéréospécificité, sur support de chlorure de magnésium.

4. Composition selon la revendication 3, dans laquelle ledit mélange à deux phases peut être obtenu par introduction dudit copolymère éthylène-propylène, contenu dans ledit mélange à deux phases, pendant l'étape de polymérisation formant ladite phase de polypropylène.

5. Composition selon l'une au moins des revendications précédentes, dans laquelle ledit copolymère éthylène-propylène contenu dans ledit mélange à deux phases est contenu en quantité comprise entre 20% et 80%, de préférence entre 30% et 70%, de préférence encore entre 40% et 60%.

6. Composition selon l'une au moins des revendications précédentes, dans laquelle ledit coterpolymère d'éthylène est choisi parmi: un copolymère de polyéthylène linéaire de densité très basse à basse et de polypropylène, un copolymère de polyéthylène linéaire basse densité et de polyéthylène très basse densité, un copolymère de polyéthylène linéaire basse densité et de polyéthylène basse densité, un copolymère de polyéthylène ultra-basse densité et de polyéthylène très basse densité.

7. Composition selon la revendication 6, dans laquelle ledit coterpolymère d'éthylène a une densité comprise entre 0,880 et 0,910.

8. Composition selon l'une au moins des revendications 6 ou 7, dans laquelle ledit coterpolymèrc d'éthylène possède un indice de fluidité à chaud (190°C/2,16 kg) de 0,8 à 15 g/10 min.

9. Composition selon l'une au moins des revendications 6 à 8, dans laquelle ledit coterpolymère d'éthylène est un copolymère de polyéthylène ultra-basse densité et de polyéthylène très basse densité.

10. Composition selon l'une au moins des revendications précédentes, dans laquelle ledit mélange à deux phases possède un module de 60 à 350 MPa et de préférence de 70 à 90 MPa.

11. Composition selon l'une au moins des revendications précédentes, dans laquelle ledit mélange à deux phases possède une température de fusion de 120 à 160°C et un indice de fluidité à chaud (190°C/2,16 kg) qui peut varier entre 0,5 et 8 g/10 min.

12. Composition selon l'une au moins des revendications précédentes, dans laquelle ladite structure fibrillaire se compose de fibrilles, alignées le long de la direction d'injection.

13. Composition selon la revendication 12, dans laquelle lesdites fibrilles sont constituées d'une série de feuillets, lesdits feuillets étant de préférence orientés principalement perpendiculairement à l'axe de ladite fibrille.

14. Bouchon d'obturation en polypropylène comportant un joint d'étanchéité formé d'une composition selon l'une au moins des revendications précédentes.

15. Récipient pour denrées alimentaires, comprenant un bouchon d'obturation et un joint d'étanchéité formé d'une composition selon l'une au moins des revendications précédentes.

16. Procédé pour préparer une composition thermoplastique à mouler sur un bouchon d'obturation pour former un joint d'étanchéité dans ledit bouchon d'obturation, ledit procédé comprenant le fait de mélanger:
a) au moins un polymère thermoplastique, choisi parmi: le polyéthylène, un copolymère élastomère polyéthylène-polypropylène, l'éthylène-acétate de vinyle, les alliages polyéthylène-polypropylène, les copolymères styrène-butadiène-styrène, les terpolymères éthylène-propylène-diène et un coterpolymère de l'éthylène; et
b) un mélange à deux phases comportant une matrice de polypropylène, qui contient un copolymère èthylène-propylène ayant une température de fusion de 120 à 160°C et un indice de fluidité à chaud pouvant varicr entre 0,5 et 8 g/10 min.
